**Europäisches Patentamt**

**European Patent Office**

**Office européen des brevets**

(19)

(11) Veröffentlichungsnummer: **0 182 242**
A2

# (12) EUROPÄISCHE PATENTANMELDUNG

(21) Anmeldenummer: 85114329.7

(22) Anmeldetag: 11.11.85

(51) Int. Cl.⁴: **F 16 L 55/04**

(30) Priorität: 23.11.84 DE 3442829

(43) Veröffentlichungstag der Anmeldung: 28.05.86
Patentblatt 86/22

(84) Benannte Vertragsstaaten: CH DE FR GB LI NL

(71) Anmelder: KRAFTWERK UNION
AKTIENGESELLSCHAFT, Wiesenstrasse 35,
D-4330 Mülheim (Ruhr) (DE)

(72) Erfinder: Sutyadi, Henri, Dipl.-Ing., Haydnstrasse 78,
D-8522 Herzogenaurach (DE)
Erfinder: Diesselhorst, Tilman, Dr. Dipl.-Ing.,
Wiesenstrasse 9, D-8521 Marloffstein (DE)

(74) Vertreter: Mehl, Ernst, Dipl.-Ing. et al, Postfach 22 01 76,
D-8000 München 22 (DE)

(54) Einrichtung zum Schutz wasserführender Kanäle gegen Druckwellen.

(57) Die Erfindung betrifft eine Einrichtung zum Schutz wasserführender Kanäle und Rohrleitungen (11, 12, 13, 14) gegen Druckwellen. Es ist vorgesehen, daß die wasserführenden Kanäle teilweise durch mechanisch nachgebende Wände (2, 4, 7, 9) begrenzt sind. Dabei sind beispielsweise Sollbruchstellen oder bei Rohren (13) mit rechteckigem Querschnitt eine nachgebende durch Scherbolzen (8) mit definierter Belastbarkeit befestigte Wand (7) vorgesehen. Im Bereich der Sollbruchstellen und der nachgebenden Wand (7) sind die Rohre (12, 13) von einem mit Luft gefüllten Expansionsraum (6) umgeben.

Kraftwerk Union Aktiengesellschaft   Unser Zeichen
VPA 84 P 6089 E

1

Einrichtung zum Schutz wasserführender Kanäle
gegen Druckwellen

Die Erfindung betrifft eine Einrichtung zum Schutz wasserführender Kanäle, insbesondere von Wasserrohren, gegen
Druckwellen.

Falls eine Druckwelle in ein Rohrnetz eindringt, können
durch die Druckwelle Komponenten des Rohrnetzes beschädigt werden. Derartige Schäden sollen durch eine Einrichtung verhindert werden, die ohne regelmäßige Inspektionen stets sicher und zuverlässig arbeitet. Darüber
hinaus soll die Einrichtung möglichst kleine räumliche
Abmessungen haben und daher kostengünstig zu erstellen
sein.

Eine Einrichtung zum Schutz wasserführender Rohrleitungen gegen Druckwellen ist bekannt (DE-OS 32 09 386).
Dabei ist vorgesehen, daß die Rohrleitungen auf Teilstücken ihrer Länge mit einem Dämpfungsfutter ausgekleidet sind. Diese wasserdichte Schicht aus einem
Schaumstoff mit luftgefüllten Poren läßt sich durch
einen Druckstoß leicht zusammendrücken. Auf diese Weise
werden Druckwellen abgebaut.

Derartige Schaumstoffe können aber im Laufe der Zeit
insbesondere in der ständig feuchten Umgebung ihre

Mnl 2 Po/29.08.1985

Eigenschaften verändern, so daß dann eine Dämpfung der
Druckwellen nicht mehr erfolgen könnte. Das macht eine
regelmäßige Wartung der Einrichtung erforderlich.

Eine andere Einrichtung zum Schutz wasserführender
Leitungen gegen Druckwellen ist aus der FR-A-20 63 516
bekannt. Hierbei sind Leitungen vorgesehen, die durch
elastische Wände begrenzt sind. Derartige Leitungen
aus elastischen Weichkunststoffen können schon im von
Druckwellen freien Dauerbetrieb beschädigt werden und
erfordern regelmäßige Inspektionen.

Der Erfindung liegt die Aufgabe zugrunde, eine Einrichtung zum Schutz wasserführender Kanäle gegen Druckwellen zu entwickeln, die ohne regelmäßige Inspektionen
stets sicher und zuverlässig arbeitet. Darüber hinaus
soll die Einrichtung möglichst kleine räumliche Abmessungen haben und daher kostengünstig zu erstellen sein.

Die Aufgabe wird erfindungsgemäß dadurch gelöst, daß die
wasserführenden Kanäle teilweise durch bei Eindringen
einer Druckwelle mechanisch nachgebende bleibend verformbare Wände begrenzt sind.

Eine Druckwelle verursacht eine Kraft auf die Wände der
wasserführenden Kanäle. In der Folge verändern sich die
nach der Erfindung mechanisch nachgebenden Wände. Durch
die plötzliche Volumenvergrößerung wird der Druck im
Wasser wirkungsvoll abgebaut.

Das wesentliche der neuen Lösung nach der Erfindung ist,
daß die Einrichtung zum Druckabbau aus widerstandsfähigem
Metall oder einem anderen harten Material besteht. Damit wird der Vorteil erzielt, daß die Einrichtung nur nach einer erfolgten Beaufschlagung mit einer Druckwelle gewartet werden muß. Trotzdem kommt die Einrichtung mit einem kleinen Bauvolumen aus.

Beispielsweise weisen wasserführende Rohre Sollbruchstellen auf, die aufgrund einer Druckwelle brechen. Im Bereich der Sollbruchstellen sind die Rohre dabei von einem mit Luft gefüllten Expansionsraum umgeben, der aus der Sollbruchstelle ausgetretenes Wasser aufnimmt. Die Druckwelle wird dadurch abgebaut. Mit dieser Weiterbildung der Erfindung wird der Vorteil erzielt, daß die Wasserversorgung auch dann aufrechterhalten bleibt, nachdem die Sollbruchstelle gebrochen ist. Der geschlossene mit Wasser gefüllte Expansionsraum wirkt dann wie ein Teil des Rohrleitungssystems. Insbesondere wird der Vorteil erzielt, daß durch Staffelung mehrerer Sollbruchstellen länger andauernde wie auch mehrere kurz aufeinander folgende Überdruckwellen abgebaut werden können.

Nach Ausgestaltungen dieser Ausführungsform ist vorgesehen, daß die wasserführenden Rohre an den Sollbruchstellen aus einem spröden Material bestehen. Die Sollbruchstellen können auch durch Einkerbungen an den Rohren       oder durch eine abgestufte Wandstärke der Rohre markiert sein.

Falls die Rohre einen rechteckigen Querschnitt haben, ist nach einer anderen Ausführungsform der Erfindung vorgesehen, daß einige Wände feststehend angeordnet sind, da die Dämpfungswirkung auch dann noch gegeben ist, wenn nur eine oder zwei Seitenwände beweglich sind. Die beweglichen Wände können auf vorteilhafte Weise durch Scherbolzen mit definierter Belastbarkeit befestigt sein.

29. AUG. 1985

0182242

- 4 -    VPA 84 P 6089 E

Hiermit wird der Vorteil erzielt, daß nach einer Druckwelle das Rohr wieder problemlos zusammenzufügen ist. Dazu sind nur die Scherbolzen zu ersetzen.

Außerdem ist denkbar, daß die Rohre teilweise als Druckabbaurohre mit Außenwänden aus plastisch bleibend verformbarem Material ausgebildet sind. Eine stoßartig einlaufende Druckwelle wird dabei durch Aufweiten der Rohre quer zur Hauptströmungsrichtung abgebaut. Die Stabilität der Druckabbaurohre ist dabei so bemessen, daß die üblichen Betriebsdrücke die Rohre nicht verformen können. Die Druckabbaurohre sind in einem Abstand von festen Rohren umgeben, die die Aufweitung der Druckabbaurohre auf ein bestimmtes Maß begrenzen. Damit wird der Vorteil erzielt, daß die Druckabbaurohre nicht überdehnt werden und daher auch nicht aufreißen können.

Eine andere Konstruktion sieht vor, daß im Inneren von Rohren mit Luft gefüllte Hohlkörper angeordnet sind, deren Wände aus verformbarem Material bestehen. Eine Druckwelle deformiert diese Hohlkörper und sorgt so für ein vergrößertes Volumen und folglich für einen Druckabbau. Diese Hohlkörper können nach einer Ausgestaltung in Strömungsrichtung ein Stromlinienprofil haben, um eine Wirbelbildung in den Rohren zu verhindern. Mit dieser Weiterbildung wird der Vorteil erzielt, daß die Rohre in ihrer äußeren Form unverändert bleiben können.

Mit der Erfindung wird insbesondere der Vorteil erzielt, daß mit kostengünstigen und weitgehend wartungsfreien Mitteln Schäden an Rohrleitungssystemen verhindert werden.

Die Erfindung soll anhand eines in der Zeichnung sche-

0182242

matisch wiedergegebenen Ausführungsbeispieles näher
erläutert werden:

Fig. 1 zeigt den äußeren Teil eines Rohres, das als
         Schutz gegen Druckwellen teilweise aus verformbarem Material besteht.

Fig. 2 zeigt den äußeren Teil eines Rohres mit Sollbruchstellen als Schutz gegen Druckwellen.

Fig. 3 zeigt einen Schnitt durch ein Rohr nach Fig. 2.

Fig. 4 zeigt den rechteckigen Querschnitt eines Rohres
         mit zwei beweglichen Wänden, die durch Scherbolzen gehalten sind.

Fig. 5 zeigt den äußeren Teil eines Rohres mit einem
         im Inneren angeordneten Hohlkörper mit Stromlinienprofil.

In ein Wasserrohr 11, 12, 14 kann an seiner Öffnung 1
eine Druckwelle eindringen. Man vergleiche die Figuren
1, 2 und 5. Diese Druckwelle wird noch im ersten Teil
des Wasserrohres 11, 12, 14 abgebaut. Zu diesem Zweck
weist das Wasserrohr 11, 12, 14 auf eine bestimmte
Länge nachgebende Wände auf, die das Volumen im Rohr
vergrößern können. Eine Vergrößerung des Volumens hat
einen Druckabbau zur Folge, so daß eine Druckwelle
nicht tiefer in das System eindringen kann. Dabei kann
der Querschnitt des Wasserrohres 11, 12, 14 ein Kreis
oder eine andere geschlossene, geometrische Form sein.

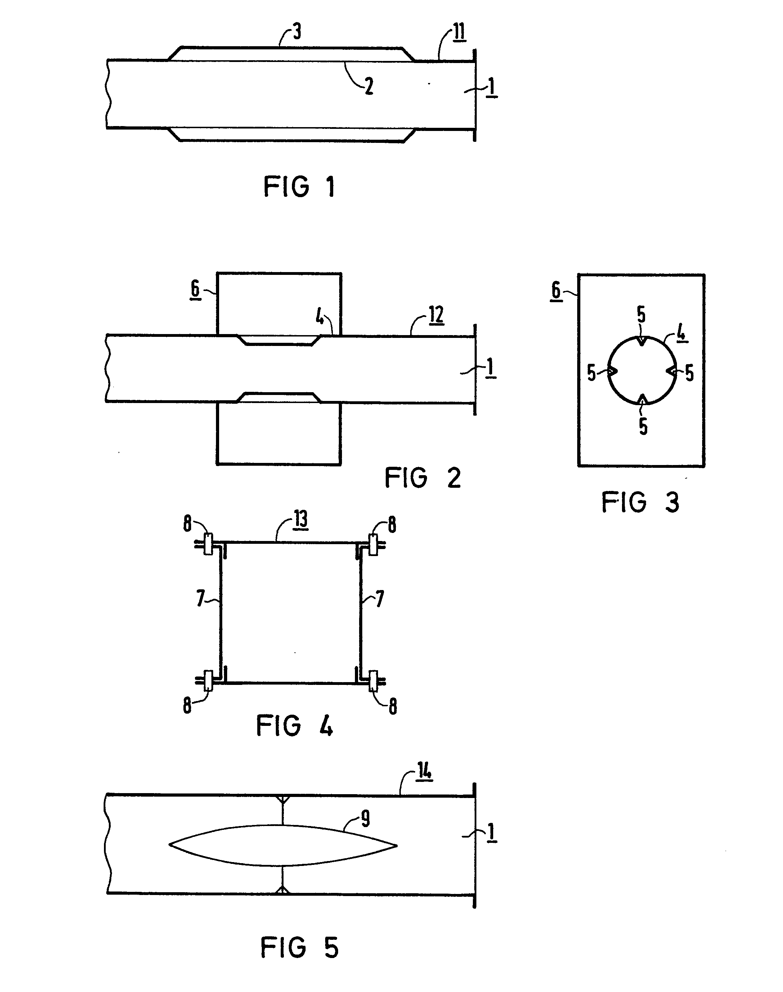

Ein Teilstück 2 des Wasserrohres 11 nach Fig. 1 besteht aus plastisch bleibend verformbarem Material.
Falls eine Druckwelle in das Wasserrohr 11 eindringt,
weitet sich das verformbare Teilstück 2 auf. Das Volu-

29. AUG. 1985

men im Rohr wird dadurch vergrößert. Das verformbare Teilstück 2 ist in einem konkreten Abstand von einem konzentrischen festen Rohr 3 umgeben. Dadurch wird die Aufweitung des verformbaren Teilstückes 2 begrenzt und eine Überdehnung verhindert.

In einem festen Wasserrohr 14 nach Fig. 5 ist ein mit Luft gefüllter Hohlkörper 9 mit Stromlinienprofil fixiert angeordnet. Dieser Hohlkörper 9 hat Wände aus verformbarem Material. Falls nun ein entsprechend hoher Druck herrscht, wird der Hohlkörper 9 zusammengepreßt und dadurch das Volumen im Rohr 14 vergrößert. Diese Vergrößerung des Volumens bewirkt auch hier einen Druckabbau.

Das Volumen im Wasserrohr 11, 12, 14 kann genauso durch andersartige mechanisch nachgebende Wände vergrößert werden. Das zusätzliche Volumen ist aber in jedem Fall begrenzt. Wasser kann aus dem System nicht auslaufen. Das Rohrleitungssystem bleibt also selbst nach einer Beaufschlagung durch eine Druckwelle in Betrieb. Verformte oder gebrochene Teile können ohne Schaden erst zu einem späteren Zeitpunkt ersetzt werden.

Die Erfindung läßt sich selbstverständlich auf andere Flüssigkeiten als Wasser und andere Gase als Luft anwenden.

2 9. AUG. 1985

0182242

Das Wasserrohr 12 nach Fig. 2 weist ein Teilstück 4 mit Sollbruchstellen auf, die nach Fig. 3 beispielsweise in Längsrichtung verlaufende Einkerbungen 5 sein können. Im Bereich der Sollbruchstellen ist das Wasserrohr 12 nach den Fig. 2 und 3 von einem Expansionsraum 6 umgeben, der zunächst mit Luft gefüllt ist. Bei einer entsprechend großen Druckwelle bricht die Wand des Teilstückes 4 des Wasserrohres 12 an den Einkerbungen 5 auf und das Wasser fließt in den Expansionsraum 6. Durch diese Volumenvergrößerung wird der Druck abgebaut.

Wasserrohre 13 mit rechteckigem Querschnitt nach Fig.4 haben beispielsweise zwei verschiebbare Wände 7 und werden durch Scherbolzen 8 zusammengehalten. Ein derartiger Aufbau kann als Sollbruchstelle nach Fig. 2 dienen. Falls nämlich das Wasserrohr 13 durch eine ausreichend große Druckwelle belastet wird, brechen die Scherbolzen 8 und das Wasser fließt in den Expansionsraum 6.

10 Patentansprüche
 5 Figuren

2 9. AUG. 1985

Liste der Bezugszeichen

1   Öffnung eines Wasserrohres

2   Teilstück eines Wasserrohres aus verformbarem
    Material

3   festes Rohr

4   Teilstück eines Wasserrohres mit Sollbruchstellen

5   Einkerbungen an einem Wasserrohr

6   Expansionsraum

7   verschiebbare Wände eines Wasserrohres mit recht-
    eckigem Querschnitt

8   Scherbolzen

9   Hohlkörper

11  Wasserrohr, teilweise aus verformbarem Material

12  Wasserrohr , teilweise mit Sollbruchstellen

13  Wasserrohr mit rechteckigem Querschnitt

14  Wasserrohr mit Hohlkörper

2 9. AUG. 1985

Patentansprüche:

1. Einrichtung zum Schutz wasserführender Kanäle, insbesondere von Wasserrohren (11, 12, 13, 14) gegen Druckwellen, d a d u r c h   g e k e n n z e i c h n e t , daß die wasserführenden Kanäle teilweise durch bei Eindringen einer Druckwelle mechanisch nachgebende, bleibend verformbare Wände (2, 4, 7, 9) begrenzt sind.

2. Einrichtung nach Anspruch 1, d a d u r c h   g e k e n n z e i c h n e t , daß Wasserrohre (12) Sollbruchstellen aufweisen, die bei einem bestimmten Druck aufbrechen, und daß die Wasserrohre (12) im Bereich der Sollbruchstellen von einem mit Luft gefüllten Expansionsraum (6) umgeben sind.

3. Einrichtung nach Anspruch 2, d a d u r c h   g e k e n n z e i c h n e t , daß die Wasserrohre (12) als Sollbruchstellen Einkerbungen (5) aufweisen.

4. Einrichtung nach Anspruch 2, d a d u r c h   g e k e n n z e i c h n e t , daß die Wasserrohre (12) an den Sollbruchstellen aus einem spröden Material bestehen.

5. Einrichtung nach Anspruch 2, d a d u r c h   g e k e n n z e i c h n e t , daß die Wasserrohre (12) an den Sollbruchstellen eine abgestufte Wandstärke aufweisen.

6. Einrichtung nach Anspruch 1, d a d u r c h   g e k e n n z e i c h n e t , daß die Wasserrohre (13) mit rechteckigem Querschnitt mindestens eine mechanisch nachgebende Wand (7) und sonst feststehende Wände aufweisen.

2 9. AUG. 1985

7. Einrichtung nach Anspruch 6, d a d u r c h   g e - k e n n z e i c h n e t , daß an Wasserrohren (13) mit rechteckigem Querschnitt die mechanisch nachgebenden Wände (7) durch Scherbolzen (8) mit definierter Belastbarkeit befestigt sind.

8. Einrichtung nach Anspruch 1, d a d u r c h   g e - k e n n z e i c h n e t , daß Wasserrohre (11) teilweise als Druckabbaurohre (2) mit Außenwänden aus plastisch  verformbarem Material ausgebildet sind und daß diese Druckabbaurohre in einem Abstand von festen Rohren (3) umgeben sind, die die Aufweitung der Druckabbaurohre begrenzen.

9. Einrichtung nach Anspruch 1, d a d u r c h   g e - k e n n z e i c h n e t , daß im Inneren von Wasserrohren (14) mit Luft gefüllte Hohlkörper (9) angeordnet sind, deren Wände aus verformbarem Material bestehen.

10. Einrichtung nach Anspruch 9, d a d u r c h   g e - k e n n z e i c h n e t , daß die Hohlkörper (9) in den Wasserrohren (14) in Strömungsrichtung ein Stromlinienprofil aufweisen.

2 9. AUG. 1985

1/1

0182242

FIG 1

FIG 2

FIG 3

FIG 4

FIG 5